# EUROPÄISCHE PATENTSCHRIFT

(11) **EP 0 984 189 B1**
(45) Veröffentlichungstag und Bekanntmachung des Hinweises auf die Patenterteilung: **11.01.2006**
(21) Anmeldenummer: 99116331.2
(22) Anmeldetag: 19.08.1999
(51) Int. Cl.: F16D 65/12

(54) **Wellen- oder Rad-Bremsvorrichtung für Fahrzeuge, insbesondere Bremsscheibe**
Shaft or wheel brake device for vehicles, particularly brake disc
Dispositif de frein d'arbre ou de roue pour véhicules, en particulier disque de frein

(30) Priorität: 05.09.1998 DE 19840579
(43) Veröffentlichungstag der Anmeldung: 08.03.2000
(73) Patentinhaber: Bayerische Motoren Werke Aktiengesellschaft, 80809 München (DE)
(72) Erfinder: Blechinger, Gerd, 81927 München (DE); Kirmse, Stefan, 82541 Münsing (DE); Ertl, Johann, 84439 Steinkirchen (DE)

(56) Entgegenhaltungen:
- WO-A-92/09819
- DE-C- 4 310 007
- DE-U- 9 421 426
- FR-A- 2 479 382

## Beschreibung

Die Erfindung bezieht sich auf eine Wellen- oder Rad-Bremsvorrichtung für Fahrzeuge, insbesondere Bremsscheibe, bei der ein drehender Bremsteil wellen- oder achsseitig lösbar über einen Anschlußteil angeordnet ist, der zumindest über eine Anschlußfläche reib- bzw. kraftschlüssig mit einer Anschlagfläche eines wellen- oder achsfesten Mitnehmers zusammenwirkt, wobei die Anschlußfläche mittels spanabhebender Bearbeitung erzeugte Bearbeitungsrillen aufweist.

Es ist aus Kostengründen üblich, die Anschlußflächen der Anschlußteile der gattungsgemäßen Vorrichtungen durch das Fertigungsverfahren "Drehen" spanabhebend zu bearbeiten. Die insbesondere durch "Feindrehen" bearbeiteten Anschlußflächen weisen zwischen den relativ breiten Bearbeitungsrillen schmale umlaufende Bearbeitungsrippen auf, die in der reib- bzw. kraftschlüssigen Verbindung mit einem wellen- oder achsfesten Mitnehmer der Kraftübertragung dienen.

Insbesondere im Fahrzeugbau sind aufgrund gestiegener Fahrzeuggewichte in Verbindung mit steigender Motor- und Bremsleistungen zwischen der Anschlußfläche des Anschlußteils der Bremsvorrichtung und einem wellen- oder achsfesten Mitnehmer erhöhte Momente zu übertragen, die mit der vorbeschriebenen Reibschluß-Verbindung nicht mehr sicher beherrschbar sind.

Um dem Problem einer Relativ-Drehung zwischen reibschlüssig gegeneinander verspannten Komponenten einer Bremsvorrichtung zu begegnen, ist es beispielsweise aus der EP 0 860 626 A bekannt, das Anschlußteil der Bremsvorrichtung mit dem wellen- oder achsfesten Mitnehmer formschlüssig über eine Verzahnung drehfest zu verbinden. Weitere bekannte formschlüssige Verbindungen sind Paßbolzen oder Paßhülsen. Derartige Einrichtungen sind in nachteiliger Weise teuer und aufwendig bezüglich Fertigung und Montage.

Die FR 247 9382 A offenbart eine Bremsvorrichtung nach dem Oberbegriff des Anspruchs 1, wobei in der Anschlußfläche spriralförmige Rillen spanabhebend bearbeitet sind. Die Rillen dienen dazu, die Wärmebeitung von der Bremsscheibe zu der Nabe zu verringern.

Der Erfindung liegt die Aufgabe zugrunde, die Anschlußfläche einer gattungsgemäßen Bremsvorrichtung derart spanabhebend zu bearbeiten, daß mit den zwischen den Bearbeitungsrillen verbleibenden, tragenden Erhebungen eine erhöhte Reibkraft erzielt ist.

Diese Aufgabe ist mit dem Patentanspruch 1 gelöst und zwar dadurch, daß die Bearbeitungsrillen sich kreuzen.

Der Vorteil der Erfindung ist darin zu sehen, daß mit der erfindungsgemäß vorgeschlagenen Bearbeitung tragende Erhebungen mit jeweils einer solchen Dimensionierung erzielt sind, bei denen quer zueinander gerichtete Dimensionierung etwa gleiche Werte aufweisen. Damit sind gegenüber den eingangs erwähnten schmalflächigen Bearbeitungsrippen relativ großflächige Einzelerhebungen erzielt, die in vorteilhafter Weise kraftschlüssig höher belastbar sind.

Zwar ist es für eine Bremsscheibe aus der US 4 156 479 bekannt, für ein Bremsteil ein ursprüngliches spanabhebendes Verfahren gegen ein anderes spanabhebendes Verfahren auszutauschen, wobei das ursprüngliche Bearbeitungsverfahren dem vorgeschlagenen Bearbeitungsverfahren entspricht, das durch das bekannte Bearbeitungsverfahren des "Drehens" ausgetauscht wird. Jedoch dient dieser Austausch der flächigen Erhebungen gegen Bearbeitungsrippen dazu, die Vibrationen von am Bremsteil angreifenden Bremsbacken zu reduzieren.

In einer bevorzugten Ausgestaltung der Erfindung weist die Anschlußfläche des Anschlußteils im wesentlichen radial gerichtet angeordnet in Radial- und Umfangsrichtung ausgedehnte Erhebungen auf, die von bogenförmigen, sich kreuzenden Bearbeitungsrillen eines auf einem Teilkreis in Umfangsrichtung des Anschlußteiles geführten Stirnfräsers rautenförmig begrenzt sind.

Mit dieser spanabhebenden Bearbeitung sind tragende Erhebungen erzielt, die sowohl in radialer Richtung als auch in Umfangsrichtung vorteilhaft ausreichende Dimensionierungen aufweisen und somit zur Steigerung der Reibkraft wesentlich beitragen.

Schließlich ist die Erfindung bevorzugt an einer topfförmigen Nabe als Anschlußteil einer Rad-Scheibenbremse vorgesehen, wobei die Nabe je eine Anschlußfläche radseitig sowie radlagerseitig aufweist.

Die Erfindung ist anhand einer Zeichnung beschrieben.

Eine Bremsscheibe 1 einer nicht näher dargestellten Wellen- oder Radbremsvorrichtung für Fahrzeuge umfaßt einen drehenden Bremsteil 2, der wellen- oder achsseitig lösbar über einen Anschlußteil 3 angeordnet ist, der zumindest über eine Anschlußfläche 4 reib- bzw. kraftschlüssig mit einer Anschlagfläche eines nicht gezeigten, wellen- oder achsfesten Mitnehmers zusammenwirkt, wobei die Anschlußfläche 4 mittels spanabhebender Bearbeitung erzeugte Bearbeitungsrillen 5 aufweist.

Um in der mit Bearbeitungsrillen 5 aufweisenden Anschlußfläche 4 eine erhöhte Reibkraft für reib- bzw. kraftschlüssige Verbindung zu erzielen, wird erfindungsgemäß vorgeschlagen, daß die Anschlußfläche 4 von sich kreuzenden Bearbeitungsrillen 5 eines spanabhebend mit einem vorbestimmten Vorschub "x" bewegten Werkzeuges 6 begrenzte Erhebungen 7 von jeweils solcher Ausdehnung aufweist, daß die tragenden Erhebungen 7 in der reib- bzw. kraftschlüssigen Verbindung plastisch unverformbar sind.

In einer bevorzugten Ausgestaltung weist die Anschlußfläche 4 im wesentlichen radial gerichtet angeordnete, in Radial- und Umfangsrichtung ausgedehnte Erhebungen 7 auf, die von bogenförmigen, sich kreuzenden Bearbeitungsrillen 5 eines auf einem Teilkreis in Umfangsrichtung des Anschlußteiles 3 geführten Stirnfräsers 6 rautenförmig begrenzt sind. Mit den rautenförmigen Erhebungen ist in der reib- bzw. kraftschlüssigen Verbindung des Anschlußteiles 3 mit einem nicht gezeigten, wellen- oder achsfesten Mitnehmer sowohl in radialer Richtung als auch in Umfangsrichtung eine gesteigerte Reibkraft erzielt.

Die Erfindung findet bevorzugt Verwendung bei einer Rad-Bremsscheibe 1 mit einer topfförmigen Nabe 3 als Anschlußteil, die sowohl radseitig sowie radlagerseitig jeweils eine Anschlußfläche 4 aufweist.

Mit der Erfindung ist eine deutliche Erhöhung der übertragbare Momente ohne formschlüssige Verbindung in vorteilhafter Weise erzielt, womit die bei einer formschlüssigen Verbindung bedingten fertigungs- und montagetechnischen Probleme vermieden sind. Die Erfindung ist weiter vorteilhaft anwendbar in der reibschlüssigen Verbindung von Bremsscheibe und Rad sowohl bei Aluminiumrädern als auch bei lackierten Stahlrädem. Da femer zusätzliche Kosten und gewichtsserhöhende Elemente in Fortfall kommen, ergibt sich eine einfach zu beherrschende, in einen bestehenden Fertigungsprozeß integrierbare prozeßsichere Fertigung der jeweiligen Anschlußfläche bzw. Oberfläche am jeweiligen Anschlußteil einer Bremsscheibe 1.

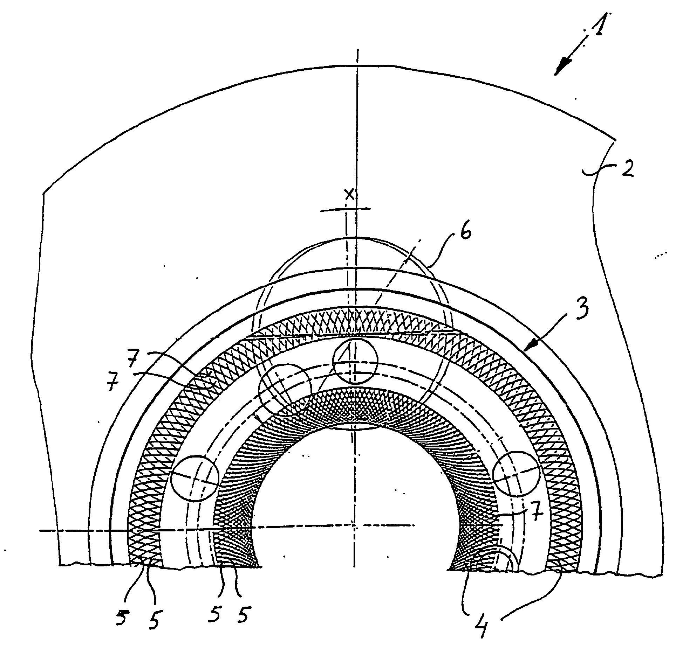

## Patentansprüche

1. Wellen- oder Rad-Bremsvorrichtung für Fahrzeuge, insbesondere Bremsscheibe (1),
- bei der ein drehender Bremsteil (2) wellen- oder achsseitig lösbar über einen Anschlußteil (3) angeordnet ist, der
- zumindest Ober eine Anschlußfläche (4) reib- bzw. kraftschlüssig mit einer Anschlagfläche eines wellen- oder achsfesten Mitnehmers zusammenwirkt, wobei
- die Anschlußfläche (4) mittels spanabhebender Bearbeitung erzeugte Bearbeitungsrillen (5) aufweist,
- die Anschlußfläche (4) von Bearbeitungsrillen (5) eines spanabhebend mit einem vorbestimmten Vorschub (x) bewegten Werkzeuges (6) begrenzte Erhebungen (7) von jeweils solcher Ausdehnung aufweist, daß
- die tragenden Erhebungen (7) in der reib- bzw. kraftschlüssigen Verbindung plastisch unverformbar sind,
**dadurch gekennzeichnet, daß** die Bearbeitungsrillen sich kreuzen.

2. Bremsvorrichtung nach Anspruch 1, **dadurch gekennzeichnet,**
- **daß** die Anschlußfläche (4) im wesentlichen radial gerichtet angeordnete, in Radial- und Umfangsrichtung ausgedehnte Erhebungen (7) aufweist, die
- von bogenförmigen, sich kreuzenden Bearbeitungsrillen (5) eines auf einem Teilkreis in Umfangsrichtung des Anschlußteiles (3) geführten Stirnfräsers (6) rautenförmig begrenzt sind.

3. Bremsvorrichtung nach Anspruch 2, **dadurch gekennzeichnet, daß** an einer topfförmigen Nabe (3) als Anschlußteil einer Rad-Bremsscheibe (1) je eine Anschlußfläche (4) radseitig sowie radlagerseitig vorgesehen ist.

## Claims

1. A shaft or wheel brake device for vehicles, in particular a brake disc (1),
- in which a rotating brake part (2) is releasably arranged on the shaft or axle side via a connecting part (3), which
- cooperates in a frictionally engaged manner or non-positively with a stop face of a driver fixed to the shaft or axle, at least via a connecting face (4), wherein
- the connecting face (4) has machining grooves (5) produced by means of machining,
- the connecting face (4) has elevations (7) limited by machining grooves (5) of a tool (6) moved in a cutting manner with a predetermined feed (x), to such an extent that
- the bearing elevations (7) are plastically undeformable in the frictionally engaged or non-positive connection,
**characterised in that** the machine grooves intersect.

2. A brake device according to claim 1, **characterised in that**
- the connecting face (4) has elevations (7) which are arranged so as to be substantially radially directed and extended in the radial and peripheral direction, which
- are limited in a rhombic manner by arcuate, intersecting machining grooves (5) of a face cutter (6) guided arcuately in the peripheral direction of the connecting part (3).

3. A brake device according to claim 2, **characterised in that** a respective connecting face (4) is provided on the wheel side and on the wheel bearing side on a pot-shaped hub (3), as a connecting part of a wheel brake disc (1).

## Revendications

1. Dispositif de freinage d'arbre ou de roue pour véhicules, en particulier disque de frein (1),
- dans lequel une partie de freinage rotative (2) est disposée de façon amovible du côté de l'arbre ou de l'essieu par le biais d'une pièce de raccordement (3), qui
- coopère au moins par le biais d'une surface de raccordement (4), par frottement ou complémentarité de forces, avec une surface de butée d'un élément d'entraînement fixe sur l'arbre ou l'essieu,
- la surface de raccordement (4) présentant des rainures d'usinage (5) produites au moyen d'un usinage par enlèvement de matière,
- la surface de raccordement (4) présentant des élévations (7) délimitées par des rainures d'usinage (5) réalisées par un outil (6) à enlèvement de matière déplacé avec une avance prédéterminée (x), les élévations ayant chacune une extension telle que
- les élévations porteuses (7) sont plastiquement indéformables dans la liaison par frottement ou complémentarité de forces,
**caractérisé en ce que**
les rainures d'usinage se croisent.

2. Dispositif de freinage selon la revendication 1,
**caractérisé en ce que**
- la surface de raccordement (4) présente des élévations (7) disposées pour l'essentiel selon une orientation radiale avec une extension en direction radiale et périphérique, et
- qui sont délimitées par des rainures d'usinage (5) en forme d'arc et se croisant, réalisées par une fraise en bout (6) guidée sur une partie de cercle dans la direction périphérique de la pièce de raccordement (3).

3. Dispositif de freinage selon la revendication 2,
**caractérisé en ce qu'**
au niveau d'un moyeu en forme de pot (3), faisant office de pièce de raccordement d'un disque de frein de roue (1), il est prévu respectivement une surface de raccordement (4) aussi bien du côté de la roue que du côté de l'essieu.
